Europäisches Patentamt

European Patent Office

Office européen des brevets

(11) Numéro de publication : **0 446 103 A2**

(12) # DEMANDE DE BREVET EUROPEEN

(21) Numéro de dépôt : **91400540.0**

(22) Date de dépôt : **27.02.91**

(51) Int. Cl.⁵ : **A01D 34/70**

(30) Priorité : **01.03.90 FR 9002823**

(43) Date de publication de la demande :
**11.09.91 Bulletin 91/37**

(84) Etats contractants désignés :
**AT BE CH DE ES GB GR IT LI LU NL SE**

(71) Demandeur : **Charpenet, Louis-Joseph**
**42, Rue de Remeron**
**F-58000 St Eloi (FR)**

(72) Inventeur : **Charpenet, Louis-Joseph**
**42, Rue de Remeron**
**F-58000 St Eloi (FR)**

(54) **Appareil pour le ramassage du gazon, des feuilles mortes et autres souillures du sol.**

(57)    La présente invention est relative a un appareil pour le ramassage du gazon, des feuilles mortes et autres souillures du sol comprenant essentiellement un chassis, un collecteur, un ventilateur avec conduits et un réservoir de stockage principalement caractérisé par un conduit d'amené souple, un collecteur flottant universel auto-débourrant, un ventilateur à pales propulsives et un réservoir à trappe escamotable ou à vidange en élévation, l'ensemble monté sur un chassis universel monotube réglable en position latérale.

Figure 5

EP 0 446 103 A2

# APPAREIL POUR LE RAMASSAGE DU GAZON, DES FEUILLES MORTES ET AUTRES SOUILLURES DU SOL

La présente invention concerne un appareil pour le ramassage du gazon, des feuilles mortes et autres souillures du sol. L'appareil peut être porté sur véhicule d'entretien, sur tracteur, il peut être tracté, voir auto-moteur.

Une telle machine est généralement composée des principaux éléments suivants :
– un ventilateur destiné à aspirer le produit à ramasser pour l'emmagasiner dans un réservoir.
– un réservoir qui peut être soit une hotte à vidange par simple trappe, soit une hotte montée sur vérins hydrauliques pour déversement en hauteur dans une remorque ou un camion. Ce réservoir peut être également une remorque attelée derrière le système d'aspiration. Il peut être aussi tout simplement un sac poubelle.
– un chassis support reliant ensemble les éléments ci-dessus et permettant éventuellement de les rattacher au porteur.
– un système collecteur du produit à ramasser. Le collecteur peut être soit un coffre de réception ancré à la sortie du gazon d'une tondeuse, soit un balai ramasseur, voir le brevet Charpenet n° 86 12263, soit une simple bouche d'aspiration.
– un ensemble de conduits reliant le ventilateur d'une part au collecteur et d'autre part au réservoir.
– un ensemble destiné à assurer la rotation du ventilateur. Celle-ci sera obtenue soit par prise de force avec ou sans arbre de transmission, avec ou sans courroie intermédiaire, soit par moteur auxilliaire.

L'existence et l'ensemble de ces éléments réunis dans une même machine est connu. Malheureusement, dans l'état actuel de la technique, plusieurs présentent un certain nombre d'inconvénients, dont la globalité est particulièrement néfaste à une utilisation rationnelle et rentable de l'appareil.

Dans les appareils connus le conduit d'amené, généralement en plastique, est relativement rigide. Malheureusement ce système ne permet qu'un faible et insuffisant déplacement du collecteur par rapport au ventilateur. La présente invention a pour bojet l'utilisation d'un conduit d'aspiration doté d'au moins un manchon souple. Dans une forme préférentielle ce conduit est composé d'un fil rigide formant ossature enroulé dans la forme hélicoïdale et noyé dans une enveloppe en matière plastique simple.

Hors mis le brevet Charpenet n° 86 12263 et le certificat d'addition n° 87 03360 les ventilateurs connus et destinés à cet usage présentent tous les principaux inconvénients suivants : bourrage par enroulement de la matière aspirée autour des pales du rotor, bourrage par formation de pains à l'intérieur du stator, nettoyage malaisé par démontage fastidieux du capot du stator et non écoulement des eaux de nettoyage.

Par le brevet Charpenet n° 86 12263 et le certificat d'addition n° 87 03360, on sait faire un ventilateur répondant parfaitement aux éxigences spécifiques du ramassage du gazon ou des souillures du sol. Il s'agit d'un ventilateur centrifuge dont les pales du rotor, ou dont les extrémités intérieures et extérieures de chaque pale en cas de pales incurvées, sont chacunes dans un plan qui est parallèle et extérieur à l'axe de rotation du rotor. Ce plan, suivant le sens de rotation du rotor, précéde le plan qui lui est parallèle et qui passe par cet axe. Ainsi les pales sont essentiellement propulsives. Dans ce même brevet on perfectionne cette technique en prévoyant que les plans qui contiennent chaque pale sont extérieurs ou au plus tangents au cercle, ou au cercle principal en cas d'ellipse, d'orifice de pénétration de la matière dans le ventilateur. Ainsi aucune pale n'encombre la partie centrale du rotor correspondant à l'orifice de pénétration de la matière aspirée. Il n'y a pas d'enroulement possible de la matière aspirée autour de ces pales. Dans ce même brevet on améliore considérablement la difficile et fastidieuse opération de nettoyage par l'usage d'attaches rapides pour le montage et le démontage du capot qui porte la goulotte de pénétration du produit aspiré. La conception de ce capot et du stator du ventilateur sont tels que le capot, lorsqu'il est monté, chevauche par l'intérieur, côté éjection, la cage elle-même du rotor. Ainsi on supprime, côté refoulement, tout obstacle à l'écoulement de la matière. La conception de la cage elle-même du ventilateur est telle que, lorsque le capot est enlevé, aucun rebord résiduel ne fait obstacle à l'écoulement des eaux de nettoyage.

Le certificat d'addition n° 8703360 au brevet cité ci-dessus n° 8612263 améliore encore la technique de ce ventilateur par l'utilisation d'une cage de stator à section cylindrique ou à section spirale à deux centres situés dans un plan parallèle au plan qui contient la paroi extérieure du conduit d'éjection. Ainsi on supprime ou tout au moins on diminue au maximum la partie libre entre rotor et stator là où il y a possibilité de formation de pains par agglomération du gazon humide.

L'application de cette technique de ventilateur concerne tout appareil pour le ramassage du gazon, des feuilles mortes et d'autres souillures du sol entrant dans le cadre de la présente invention.

Dans les appareils connus, lorsque la hotte est à vidange par trappe, celle-ci est montée sur charnières à la manière d'une simple porte avec verrou de fermeture. Il en résulte un système compliqué de verrouillage et une ouverture difficile et brutale de la trappe de vidange en raison de la charge de la matière emmagasinée sur cette trappe. Par le brevet Charpenet n° 8612263 on sait faire une trappe de vidange, non plus simplement ouvrante par rotation, mais escamotable et qui se tient automatiquement fermée ou automatiquement ouverte sans l'adjonction du moindre verrou. La trappe, essentiellement suspendue à quatre bras, deux par deux de longueurs différentes, s'escamote et ne tourne pas autour d'un seul axe. Ceci rend le mouvement d'ouverture indépendant de la charge qui pèse sur elle et ceci supprime toutes forces de frottement. La longueur de ces bras et les positionnements de leurs points de rotation sont tels, qu'en les faisant pivoter, la trappe se décolle légèrement de son contact avec la hotte et vient se placer en arrière de celle-ci.

L'application de cette technique de trappe de vidange concerne tout appareil pour le ramassage du gazon, des feuilles mortes et autres souillures du sol, entrant dans le cadre de la présente invention.

Dans le brevet Charpenet n° 8612263 la trappe est partiellement maintenue fermée ou ouverte par l'action d'un ou de plusieurs ressorts ancrés chacun d'une part sur un point fixe solidaire de la hotte, d'autre part sur un bras support de la trappe.

Dans la présente invention on remplacera avantageusement ce ou ces ressorts par un tirant articulé de commande de position de la trappe. Ce tiran est relié, d'une part par l'intermédiaire d'un axe à l'une de ses extrémités, à un bras solidaire d'un des bras de support de la trappe, et d'autre part à l'autre extrémité, rigidement à un levier de position de la trappe. Ce tiran au voisinage de son articulation, prendra appui sur une butée fixe judicieusement positionnée de façon à empêcher la fermeture de son articulation sous l'action intempestive de la trappe et ainsi de façon à empêcher l'ouverture accidentelle de celle-ci. L'angle ayant pour sommet l'articulation du tirant et pour côtés les droites joignant cette articulation d'une part au point d'attache au bras solidaire du bras support de la trappe d'autre part à l'axe de rotation du levier de commande de positionnement de la trappe cet angle, d'une valeur voisine mais inférieure à 180°, ne pourra se refermer sous l'action de la trappe du fait de la butée,mais il le pourra si l'on agit sur le levier. Inversement, en position d'ouverture totale, la même butée empêchera la chute intempestive de la trappe. Seule l'action sur le levier permettra l'abaissement de celle-ci. D'autres particularités sur cette spécificité apparaitront à la lecture de la description et des dessins notamment le réglage de la position du levier de commande de la trappe par rapport à l'opérateur.

Dans les appareils connus les parois du réservoir où l'on emmagasine le produit ramassé sont partiellement constituées de toles perforées, ou autres systèmes de même nature, de manière à assurer l'évacuation de l'air rejeté par le ventilateur et porteur du produit ramassé. Particulièrement en période sec cette technique a pour conséquence indésirable de créer un nuage de poussière tout autour de l'appareil. La présente invention a pour objet d'éviter ce nuage en utilisant un réservoir aux parois pleines et en ménageant à l'intérieur du réservoir, ou communicant avec l'intérieur du réservoir, un système de séparation de l'air et de la matière transportée, ce peut être par exemple un cyclone. Dans la présente invention on utilisera préférentiellement un système à chicanes séparant l'air des particules solides qu'il contient. L'orifice de sortie de ce système débouchera à l'air libre. Un perfectionnement de ce perfectionnement consiste à relier par un tuyau adequat cet orifice de sortie à l'entrée de l'air dans le collecteur du produit à ramasser. Ainsi l'air véhiculé depuis le point de ramassage jusqu'au réservoir circule partiellement en circuit fermé servant d'élément porteur du produit à rammasser. Il y a là un progrés appréciable en ce qui concerne les nuisances par poussière et par décibels. Dans une réalisation préférentielle de l'invention, ces chicanes auront l'aspect d'un tiroir ménagé dans la partie haute du réservoir et logé dans un compartiment spécial. En tirant ce tiroir on débarasse ces chicanes des poussières qu'elles retiennent. L'orifice, dans ce compartiment, d'entrée de l'air dans ces chicanes se trouve naturellement à l'intérieur du réservoir, tandis que l'orifice de sortie donnant vers l'extérieur peut être relié par un tuyau adéquat à l'entrée d'air côté aspiration. Dans un réalisation préférentielle l'orifice de pénétration de l'air dans ces chicanes est dans un plan approximativement horizontal. Et le fait d'extraire le tiroir vers l'extérieur permet de débarrasser successivement toutes les chicanes des corps solides accumulés par chute par gravité à l'intérieur même du réservoir. Ce dispositif permet le nettoyage, si nécessaire, des chicanes en cours de travail sans polluer la surface du ramassage.

Dans les appareils connus, lorsque le réservoir est monté sur élévateur hydraulique avec déversement en hauteur, le guidage lors de l'élévation se fait par glissières. Quelque fois il est étonnament confié aux vérins hydrauliques eux-mêmes en utilisant le guidage intrinsèque des tiges de vérin. Dans la première solution le système est cher, encombrant, lourd et peu précis. Dans la seconde, utilisant les vérins à des fins pour lesquels ils n'ont pas été conçus, il provoque une usure prématurée de ceux-ci, voire leur détérioration par flexion et même torsion des tiges de vérin. De plus il est nécessaire d'utiliser au moins deux vérins. Le déversement s'obtient en limitant le mouvement vers le haut du réservoir et en utilisant la dernière partie de la course des vérins pour obtenir le mouvement de rotation du réservoir. Dans les appareils connus le déversement est trés brutal car aucune amorce de rotation n'est prévue avant la fin de la montée. Ainsi pour obtenir une vitesse de mise en hauteur raisonnable on est obligé d'accepter une rotation brutale.

La rotation pour le déversement du réservoir se fait naturellement autour d'un axe situé dans le voisinage de l'arête supérieure du côté du réservoir correspondant au déversement, côté qui se trouve donc en partie basse au moment de la vidange. Dans les appareils connus l'angle de déversement est limité par la nécessité de toujours maintenir la verticale abaissée du centre de gravité du réservoir vide du côté de l'axe de poussée des vérins par rapport à l'axe de rotation du réservoir. Sans cette condition, après déversement, au moment de la rentrée des vérins, le réservoir descendrait en position de vidange sans reprendre sa position initiale. De ce fait, l'angle de déversement est maintenu dans des limites incompatibles avec un bon écoulement du produit, surtout lorsque celui-ci est humide et adhére aux parois.

Dans les appareils connus, toujours à vidange en élévation, le couvercle du réservoir est monté sur une charnière solidaire du réservoir lui-même. Cette charnière est située à proximité de l'arête supérieure du côté supérieur du réservoir en position vidange. Au moment du déversement il s'ouvre sous le seul effet de son propre poids. Ce système a trois défauts principaux : premièrement le couvercle par son propre poids participe à la diminution de l'angle de déversement. Deuxièmement dans ce système s'ouvrant de son propre poids il ne peut s'ouvrir au maximum qu'à la verticale et ainsi il entrave l'écoulement du produit à vidanger. Enfin, on sait que le réservoir est alimenté par un conduit venant du ventilateur, au moment de la mise en hauteur il y a désaccouplement de ce conduit d'avec la bouche d'entrée du produit dans le réservoir. Au moment de la remise en position travail cet accouplement doit être à nouveau assuré en sécurité. Cette nécessité exclue le positionnement de cette bouche d'entrée dans le couvercle car celui-ci- ,libre autour de sa charnière, n'est pas mécaniquement maintenu en position ouverte ou fermée. Ainsi on doit ménager la bouche d'entrée sur le flan du réservoir lui-même. Il y a là une perte importante du volume réel utile par rapport à une alimentation par le couvercle, soit sur le côté, soit sur le dessus, ce qui assure encore un meilleur remplissage par tassement (brevet Charpenet n° 86 12263).

La présente invention améliore sur tout ces points la technique du déversement en élévation. Le guidage au moment de la mise en hauteur du réservoir ne se fait ni par glissières ni par les vérins eux-mêmes mais par un système à bras articulés. Solidaire du chassis, on ménagera de chaque côté du réservoir et à proximité de sa partie supérieure mais de préférence plus haut que l'axe de déversement deux points de rotation situés sur le même axe horizontal parallèle-à l'axe de déversement. Ces points sont les points fixes des bras articulés. Solidairesdu réservoir on ménagera, vis à vis des deux points ci-dessus, deux points de levage et de rotation. Ces deux points, un de chaque côté du réservoir, sont situés sur un même axe horizontal dit axe de déversement. Cet axe est situé à proximité de l'arête supérieure, mais de préférence nettement en dessous, du côté du déversement du réservoir. Deux bras identiques, dits bras articulés de levage, un de chaque côté, relient ces points deux par deux. Dans une réalisation préférentielle de l'invention on utilise un seul vérin de levage et de rotation. Il sera naturellement situé à même distance de chacun de ces bras. Ces deux bras sont solidement reliés l'un à l'autre, par un tube soudé par exemple, de manière à assurer leur identité et simultanéité de mouvement rotatif. La partie basse du réservoir, par patins, rouleaux ou roulettes, un de chaque côté, prend appui sur un guide, un de chaque coté. Ces guides maintiennent le réservoir en position pendant toute la durée de l'élévation. Un vérin à égale distance des deux bras - mais on peut trés bien concevoir un vérin de chaque côté - prend appui en partie basse sur un axe fixe situé à proximité de la partie basse du réservoir et vers le côté de déversement, et en partie haute, généralement côté tige, sur un axe situé en dessous de l'axe de déversement mais déporté vers le réservoir par rapport à cet axe. Ainsi la poussée du ou des vérins soulève le réservoir maintenu dans son mouvement adéquat par, d'une part les bras de levage qui tournent vers le haut chacun autour de son point fixe, d'autre part par les deux guides cités ci-dessus. Deux butées, une de chaque côté du réservoir, limitent le mouvement vers le haut de ces bras, en n'utilisant que partiellement la course du ou des vérins. La course résiduelle sera utilisée pour le déversement. Ce système à leviers articulés est simple à réaliser. Il est mécaniquement trés fiable.

Dans une réalisation préférentielle de l'invention, pour obtenir une amorce du déversement bien avant la fin de la course vers le haut ce qui rend moins brutal le déversement et ce qui améliore l'angle de poussée du ou des vérins les deux guides, un de chaque côté du réservoir, qui déterminent la position de la partie basse du réservoir sont inclinés du bas vers le haut du côté opposé à l'axe de déversement par rapport à l'axe de poussée du ou des vérins. Ainsi, au fur et à mesure de la montée, la partie basse du réservoir s'écarte du ou des vérins amorçant le déversement et diminuant l'angle déterminé par l'axe longitudinal du ou des vérins et le rayon de rotation ayant pour centre l'axe de déversement et pour extrémité l'axe de poussée du ou des vérins. Ce système améliore naturellement le rendement de la poussée du ou des vérins au moment du début de la rotation du réservoir.

Ainsi la présente invention consiste en ce que le plan - ou les plans ou au moins l'un des plans s'il y en a plusieurs - qui contient au moins deux positions du système de guidage du bas du réservoir, forme un angle aigu - ou chacun un angle aigu - ouvert vers le haut avec le plan qui contient le système de guidage du haut du réservoir ou qui contient au moins deux positions de ce système et ceci quelque soit le système de guidage, compas, glissières, ou autre. Dans les appareils connus ces deux plans sont ou parallèles ou convergents vers le haut ou confondus.

La présente invention permet d'obtenir un angle de déversement du réservoir assurant l'écoulement de la matière ramassée en toutes conditions. Nous savons que pour obtenir ce résultat, la condition inévitable est que le réservoir ait une rotation telle que la verticale abaissée de son centre de gravité tombe du côté opposé à l'axe de poussée du ou des vérins par rapport à l'axe de rotation. Malheureusement dans ce cas au moment de la descente le réservoir reste en position vidange. La présente invention consiste à placer un ou plusieurs ressorts de rappel assurant la rotation du réservoir vers sa position initiale dès que la pression du ou des vérins est nulle ou inversée et avant descente. Ce ou ces ressorts auront avantageusement une extrémité solidaire du réservoir et l'autre d'un point fixe du système haut de guidage quelque soit ce système. Pour éviter que le ou les ressorts n'entrent en actione prématurément -c'est à dire avant basculement par gravité du réservoir- ce qui aurait pour inconvénient de gêner l'action du ou des vérins et ce qui conduirait à l'emploi de ressorts de dimensions démesurées dans une réalisation préfé-rentielle de l'invention on reliera judicieusement l'une des extrémités de ce ou de ces ressorts à son point d'ancrage non plus directement mais par l'intermédiaire d'un bras partiellement libre en rotation. Une butée de ce bras est positionnée de façon à arrêter sa rotation au moment où le ressort doit commencer à agir.

La présente invention palie aux nuisances crées par le couvercle dans sa réalisation connue. Dans la présente invention le couvercle n'a plus sa charnière solidaire du réservoir mais du chassis. Le réservoir étant en position de chargement, cette charnière est située au voisinage de l'arête supérieure du côté du réservoir opposé à l'axe de rotation pour le déversement, mais dans la présente invention elle a une position fixe par rapport au chassis de l'appareil. La fermeture ou l'ouverture du couvercle est commandée par un tirant relié d'une part à un bras solidaire du couvercle d'autre part à l'un des bras articulé de relevage, bras support et guide du haut du réservoir et ce en un point judicieux de ce bras. Le rapport de la longuer du bras solidaire du couvercle et de la distance du point d'ancrage du tirant sur le bras de relevage au point de rotation de celui-ci est telle qu'à l'élévation jusqu'à butée du réservoir correspond une ouverture à environ 90° du couvercle. Les positions des bras de levier sont telles que le couvercle s'ouvre d'abord rapidement pour dégager le passage du réservoir puis finit sa course en douceur. Ainsi le couvercle n'accompagne pas le réservoir dans son mouvement d'élévation et de rotation et il est maintenu mécaniquement et rigidement ouvert ou fermé. Ceci permet de prévoir sur le côté du couvercle ou mieux sur le dessus la bouche d'entrée dans le réservoir du produit ramassé.

Pour ce type d'appareil l'usage du sac poubelle comme réservoir de réception du produit à collecter est connu. Cette solution est économique de réalisation et d'utilisation. Pour les surfaces relativement modestes elle est assez pratique. Malheureusement les appareils connus utilisent au maximum deux sacs poubelles embarqués. Cela oblige à des arrêts fréquents et à des retours fréquents aux points de collecte des sacs poubelle.

La présente invention a pour objet de palier à cet inconvénient par l'installation sur le chassis de l'appareil d'un tourniquet pouvant recevoir plusieurs sacs-poubelle : 2, 3, 4 ou 5 ou plus. Tous les sacs sont en place sur le tourniquet. Le cul de chaque sac repose sur un support inférieur tandis que la gueule de chaque sac est maintenue en place et béante par un dispositif classique d'ensachage. Le tout peut tourner manuellement autour d'un axe central. Chaque sac passe successivement,et y est stoppé par crabotage,au droit de l'orifice de sortie du produit ramassé et éjecté par le ventilateur.

Dans les appareils connus le chassis supportant le ventilateur, son système d'entrainement et le réservoir de stockage et, pour les appareils portés, chassis également destiné à relierl'ensemble au porteur, dans ces appareils là, le chassis est trés complexe. De plus il est différent selon qu'il s'agit d'un appareil à réservoir avec trappe de vidange, d'un appareil à réservoir à vidange en élévation ou d'un appareil muni d'un sac poubelle comme réservoir. Il est en outre différent selon que le porteur a ou n'a pas de prise de force. Pour les porteurs à prise de force il diffère d'un appareil à l'autre selon la vitesse de rotation de la prise de force. Pour les porteurs munis d'un attelage trois points standardisé il diffère d'un appareil à l'autre selon la largeur du porteur.

Il est aisé d'imaginer les problèmes causés par une telle diversité au niveau du constructeur, au niveau du stockiste et au niveau de l'utilisateur lui-même qui est pratiquement contraint de changer d'appareil lorqu'il change de porteur.

La présente invention a pour objet la conception d'un chassis universel et simple. Dans une réalisation préférentielle de l'invention ce chassis est essentiellement composé d'un tube, carré de préférence, de section appropiée et de forte épaisseur. A une extrémité de ce tube est fixé le ventilateur. La liaison tube - ventilateur se fait de préférence par boulons (en général 4). Les trous de fixation sont oblongs pour permettre la tension des courroies de transmission. De chaque côté de la partie médiane de la partie du tube comprise entre le ventilateur et son autre extrémité il y a deux plaques, fixées par soudure de préférence, et percées chacune d'un trou. Sur ces trous seront fixés toutes pièces destinées à accrocher l'appareil à un porteur et notamment des tourillons normalisés d'attelage trois points. Un troisième point de fixation est obtenu par une des deux pièces montantes fixées, par soudure de préférence, au voisinage de la même partie médiane du tube. Ces pièces sont percées chacune d'un trou destiné à recevoir un troisième axe d'ancrage, notamment le troisième point d'un attelage trois points normalisé. Dans une réalisation préférentielle de l'invention sur le tube principal est ensuite fixé selon le cas d'une part :
soit un moteur auxiliaire relié au ventilateur par poulies ou courroies (une ou plusieurs
soit un bloc paliers recevant le mouvement de la prise de force du porteur par l'intermediaire d'un arbre à cardans et le communiquant au ventilateur par un ensemble de poulies et courroies.
D'autre part
Soit un réservoir de stockage à vidange par trappe
Soit un ensemble réservoir de stockage à vidange en élévation et son mécanisme.
Soit un système de tourniquet pour le stockage en sacs poubelle.

Enfin dans cette même réalisation préférentielle sur ce tube principal sont également attachées, si leur existence est nécessaire, les pièces support du collecteur du produit à ramasser.

En cas d'appareil porté sur tracteur, il est nécessaire, pour ménager un passage au tuyau d'aspiration, que l'origine d'entrée de ventilateur soit dégagée de la roue sur le côté du tracteur. Selon la largeur du tracteur dans la technique connue on est obligé de prévoir plusieurs modèles d'appareils chacun étant adapté à la largeur du porteur. Grâce à un dispositif de déplacement latéral de l'appareil sur le tracteur la présente invention permet de fixer sur le trois points de n'importe quel tracteur un modèle universel de chassis d'appareils selon l'invention quelque soit la largeur du tracteur.

Dans une forme préférentielle de l'invention le tube chassis de l'appareil est doté de deux plaques percées destinées à recevoir les tourillons normalisés correspondant aux rotules des bras de relevage. Ces tourillons sont des axes d'un diamètre normalisé dont une extrémité est dotée d'un épaulement suivi d'un filetage pour la fixation sur le support et dont l'autre extrémité est percée pour recevoir une goupille d'arrêt. Dans les fabrications connues les deux tourillons sont montés symétriquement par rapport à l'axe du tracteur, soit orientés vers l'extérieur, soit orientés vers l'intérieur. Dans l'invention les tourillons sont montés sur les plaques non plus symétriquement mais avec la même orientation ils sont montés orientés vers le ventilateur pour les tracteurs moins larges et opposés au ventilateur pour les tracteurs plus larges. Ainsi on obtient un réglage latéral - deux positions - du positionnement de l'appareil sur le tracteur. Dans une réalisation préférentielle de l'invention en dotant la partie filetée des tourillons, pour le blocage sur les plaques, d'une longueur suffisante on peut intercaler une bague d'épaisseur soit du côté de l'écrou, ce qui ne change rien au réglage ci-dessus, soit du côté de l'axe entre l'épaulement de l'axe et la plaque ce qui augmente le déport, d'un côté comme de l'autre, déjà obtenu par le montage ci-dessus. Ce système simple, astucieux, permet donc d'obtenir quatre positions latérales de fixation de l'appareil sur le tracteur. Ceci est amplement suffisant pour tous les types de tracteurs existants. Naturellement sans sortir du cadre de l'invention on peut imaginer d'autres systèmes de déport.

Lorsque l'appareil est accouplé à une tondeuse pour le ramassage du gazon, les dispositifs connus collecteurs du gazon à la sortie de la tondeuse, présentent de nombreux inconvénients. les deux principaux sont, d'abord qu'ils sont fréquemment à l'origine de bourrages intempestifs, et ensuite qu'ils sont spécifiques à chaque tondeuse. Le deuxième certificat d'addition déposé le 05/01/90 au brevet Charpenet n° 8612263 permet de diminuer considérablement les risques de bourrage . Le moyen employé est la constitution sur le coffre de réception, en amont de la zone de pénétratio du gazon d'une prise d'air dirigée vers la paroi d'impact du gazon éjecté par la tondeuse, L'orientation de cette prise d'air est de nature à provoquer un balayage efficace de cette paroi. Pour obtenir, venant de l'extérieur et non de l'intérieur de la tondeuse, un rapide courant d'air, protecteur de cette paroi, la section de cette prise d'air est nettement plus faible que la section, sur le coffre, de l'orifice d'aspiration en communication avec le ventilateur. En cas de gazon très humide il est également prévu de relier cette prise d'air à la tubulure d'échapement du moteur.

L'application de cette spécificité sur le coffre de réception concerne tout appareil pour le ramassage du gazon, des feuilles mortes et autres souillures du sol entrant dans le cadre de la présente invention.

La présente invention améliore encore cette technique. Le coffre de réception, selon l'invention est obligatoirement doté d'une paroi déflectrice destinée par sa face extérieure à provoquer et à diriger un flux d'air extérieur à le tondeuse - ou éventuellement les gaz d'échappement du tracteur porteur - vers la paroi d'impact du gazon, sur le coffre, et par sa face intérieure à amorcer le nécessaire virage du gazon en directiondu ventilateur. Dans certaines circonstances, humidité et abondance degazon, cette paroi peut donc elle aussi, être le siège d'un amoncellement intempestif de gazon. Suivant le même principe que précédemment, la présente invention consiste à ménager une prise d'air non chargée entre cette paroi déflectrice et la face frontale de la tondeuse. Ainsi il se produit un flux d'air de chaque côté de cette paroi. Celui qui est opposé à la sortie de la tondeuse par rapport à cette paroi, protège la paroi d'impact du coffre de réception. Celui qui se produit le long de cette paroi mais du côté de la sortie de la tondeuse, protège cette paroi deflectrice elle-même.

D'autre part, si le coffre de réception, quelque soit par ailleurs sa conception, est mal positionné à la sortie de la tondeuse, un risque fréquent d'obstruction de l'entrée de ce coffre demeure. En effet, ce coffre, quelque soit ses caractéristiques par ailleurs, se présente toujours sous la forme d'un boitier présentant une large ouverture que l'on positionne à la sortie de la tondeuse côté éjection, et dans laquelle s'engouffre le gazon tondu. Un autre orifice de ce coffre est en communication avec le réservoir de stockage par l'intermédiaire d'un tuyau adéquat et quand nécessaire d'un ventilateur - pour les petites machines ce dernier élément n'est pas indispensable -. Ce coffre est donc obligatoirement doté d'une paroi inférieure horizontale et au voisinage du sol. Dans les appareils connus ce coffre est fixé rigidement à la tondeuse sans réglage possible notamment en hauteur et ce de manière à ce que cette paroi, quelque soit la hauteur de tonte, ne touche naturellement jamais le sol. Ainsi, réglée pour une hauteur de tonte minimum, cette paroi s'écarte automatiquement du sol lorsqu'on augmente la hauteur de coupe. Et le risque est là. Le gazon tondu, généralement long, ce qui justifie la hauteur de coupe, s'entasse sur l'arête de cette paroi inférieure et ce jusqu'à l'obstruction totale de l'entrée du coffre.

Dans la présente invention le coffre de réception n'est pas fixé au carter de la tondeuse dans une position unique et non réglable. Dans la présente invention le coffre de réception est réglable en hauteur par rapport à la tondeuse. Sans sortir du cadre de l'invention, on peut imaginer toutes sortes de systèmes pour obtenir ce réglage. On peut notamment utiliser pour la fixation du coffre une série de trous disposés les uns au-dessus des autres. Onpeut aussi remplacer ces trous par une lumière. Dans une réalisation préférentielle de l'invention on utilisera un système de bras articulés. Au-dessus du carter de la tondeuse et solidaire de celui-ci on dispose un axe horizontal et parallèle à la section de la sortie de la tondeuse. Cet axe est l'axe fixe de l'articulation. Au-dessus du coffre et solidaire de celui-ci, donc qui commande sa position, on dispose un autre axe parallèle au premier. Il suffit de relier ces deux axes par deux tirants ou bras articulés,solidaires l'un de l'autre pour obtenir un support flottant du coffre de réception. Un butée réglable permet de régler la hauteur du coffre en fonction de la hauteur de la tonte. Un perfectionnement à ce système consiste à doter le coffre, soit d'un patin d'usure avec talon, soit d'une roulette frontale réglable en hauteur. Ce dernier dispositif a l'avantage d'avoir le coffre de réception toujours parfaitement réglé en hauteur par rapport au sol quelque soit la hauteur de coupe. La butée mentionnée ci-dessus limite alors la position basse du coffre uniquement au moment du relevage de la tondeuse. Elle est réglable parce que le coffre est universel et doit s'adapter à toutes les formes de carter de tondeuse.

Le coffre peut être maintenu contre la section de sortie de la tondeuse par son propre poids suspendu qu'il est à l'axe situé au-dessus de lui. Il est préférable de le maintenir mécaniquement et avec sécurité contre cette section. Pour permettre le réglage en hauteur décrit ci-dessus il est nécessaire que la hauteur utile du coffre de réception soit nettement supérieure à la plus haute hauteur de la section de sortie des tondeuses connues,sinon l'arête de la paroi horizontale supérieure du coffre deviendrait un obstacle au passage du gazon. De ce fait la partie supérieure du coffre débouche non plus dans la section de sortie de la tondeuse mais au-dessus. Pour éviter trop de perte d'aspiration par ce passage, il sera obstrué. Un moyen simple est l'utilisation d'une tôle verticale d'une longueur au moins égale à la longueur de la section d'entrée du gazon dans le coffre. Cette tôle est fixée au-dessus de la section de sortie de la tondeus et dans le même plan vertical. Dans une réalisation préférentielle de l'invention une astuce de construction consiste à utiliser l'une au mieux les deux extrémités verticales de cette tôle pour guider verticalement le coffre et le maintenir en place. Il suffit de fixer sur le coffre des butées adéquates qui prendront appui et guide sur la tôle. Le démontage, qui pour le netoyage doit être aisé et rapide, se fera en soulevant le coffre assez haut pour que ces butées échappent de la tôle. Dans une réalisation préférentielle de l'invention on remplace l'axe au-dessus du coffre par deux petits axes identiquement positionnés et solidaires du coffre. Ils sont positionnés dans les trous ménagés à l'extrémité correspondante des bras articulés. Ces axes peuvent être également solidaires de chacun des bras articulés et positionnés chacun dans des trous adéquats ménagés dans les pièces de jonction au coffre. Tous deux sont orientés dans le même sens - quel qu'il soit -. On obtient ainsi un accrochage rapide sans goupille ni boulon du coffre de réception à la tondeuse. Les axes sont d'abord emmanchés dans leurs trous respectifs par un déplacement du coffre parrallèlement à la section de sortie de la tondeuse puis les glissières sont introduites sur la tôle guide. Ces glissières par butées en bout de tôle, sont églament conçues pour empêcher alors ce déplacement. Naturellement s'il n'y a qu'une butée pour obtenir ce résultat celle-ci est située vers l'arête de la tôle qui est opposée à l'origine du mouvement mentionné ci-dessus du coffre parallèlement à la section de sortie de la tondeuse. Ainsi le coffre est maintenu en place contre la section de sortie de la tondeuse dans un sens par cette butée et dans l'autre par butée contre les supports des axes. Le démontage sans le moindre outil est instantané. Il est astucieux alors d'équiper le système de deux axes de longueurs différentes car il est plus facile d'emmancher un axe puis l'autre que les deux à la fois.

Dans les appareils connus, le système de fixation du coffre de réception à la tondeuse est spécifique à chaque type de tondeuse. Et il y en a un grand nombre. On sait que toutes les tondeuses sont munies à l'endroit de la sortie du gazon d'un système déflecteur. Ce système est fixé sur le carter de la tondeuse par au moins deux boulons. Lors de la mise en place de l'appareil, ce déflecteur est déposé et le coffre de réception prend sa place. On utilise alors pour le fixer les points d'ancrage originaux du déflecteur, ou d'autres s'ils existent ou bien encore on procède par modification du carter de la tondeuse, découpage, perçage, soudure, etc... Dans tous les cas, les points d'ancrage disponibles sur le carter de la tondeuse ayant des positions quelconques et ce dans les trois dimensions chaque adaptation est dans les appareils connus spécifique à chaque type de tondeuse. Ceci est commercialement un trés gros handicap.

Dans la présente invention le coffre de réception est doté d'un dispositif universel de fixation sur la tondeuse c'est-à-dire pouvant se monter sans aucune transformation sur tous les types de tondeuse. Aucune soudure, aucun perçage, aucune pièce spécifique n'est nécessaire. Sans sortir du cadre de l'invention, pour obtenir ce résultat, plusieurs moyens sont possibles. Notamment on peut utiliser une tôle perforée standard, ou une cornière perforée, que l'on fixe à plat sur le carter en utilisant les trous de fixation existants. Il y aura en principe au moins deux trous sur la tôle, ou la cornière, et sur le carter qui seront vis à vis, même si l'on doit employer des boulons plus petits. Sur cette tôle, ou sur cette cornière, on fixe par tous moyens appropriés les pièces qui supportent le coffre de réception. Ce dispositif ne permet pas un réglage de positionnement précis.

Dans une réalisation préférentielle de l'invention on procédera comme suit : utilisant deux trous quelconques du carter de la tondeuse, par exemple ceux libérés par la dépose du déflecteur, on fixe sur le carter deux pattes coudées à 90 °. Ces pattes, du fer plat par exemple, ont chacune un grand côté positionné verticalement et dans lequel on ménage un trou oblong également orienté verticalement. Ces pattes sont bloquées sur le carter de la tondeuse de façon à ce que le ou les plans verticaux qui contiennent les trous oblongs soient parallèles au plan de la section de sortie du gazon de la tondeuse. La position de ces plans, soit du côté de la section de sortie de la tondeuse, soit du côté opposé par rapport aux trous de fixation, est déterminée par l'éloignement de ces trous à cette section. Dans chacun de ces trous oblongs est bloquée par deux écrous - un de chaque côté - une vis, de préférence poëlier, à filetage total. Ainsi la position de chaque tête de vis est réglable tant en hauteur, par les trous oblongs, qu'en distance du plan de section de sortie de la tondeuse par le filetage. Une glissière à l'intérieur de laquelle on peut bloquer les têtes de vis dans toutes positions adéquates, est solidaire de la pièce sur laquelle sont fixées les pièces supports du coffre de réception. Dans une réalisation préférentielle de l'invention la glissière est réalisée en acier profilé à froid de section rectangulaire ouvert. La section intérieure de ce profilé est suffisante pour loger les têtes de vis et l'ouverture du rectangle suffisante pour le passage de la vis. Un écrou permet de bloquer chaque vis sur la glissière. Dans une autre réalisation préférentielle de l'invention cette glissière est solidaire de la tôle verticale positionnée au droit de la section de sortie de la tondeuse et au-dessus du carter. Ainsi cette tôle est maintenue fermement tout en pouvant être au montage positionnée avec précision. Dans une réalisation préférentielle de l'invention l'axe fixe support des bras articulés, auquel est ancré le coffre flottant de réception est solidaire de cette tôle. Pour cela on soudera judicieusement à l'une de leur extrémité deux fers plats sur cette tôle, ces fers plats sont situés chacun dans un plan perpendiculaire à la tôle. A leur autre extrémité un trou permet le passage de cet axe. Dans une autre réalisation préférentielle de l'invention ces fers plats sont, entre la tôle et l'axe, percés d'une série de trous en correspondance deux par deux. Ces trous sont destinés à recevoir une tige. Cette tige, par choix d'un couple de trous, sert de butée réglable aux bras articulés. Ceci permet le réglage de la position basse du coffre de réception au moment du relevage de la tondeuse. Dans une réalisation préférentielle de l'invention ces trous sont disposés à intervalles réguliers suivant un arc de cercle permettant d'obtenir des intervalles réguliers de réglage de la position basse du coffre.

Dans les appareils du type, le collecteur du produit à ramasser est relié au manchon d'entrée du ventilateur, par un tuyau, ou un système de tuyaux emmanchés en serre sur le manchon du collecteur ou du ventilateur. Des colliers de serrage assurent le maintien. Ce montage est malaisé et peu efficace.

La surface enveloppante du tuyau souple suivant la présente invention présentant un aspect hélicoïdal c'est-à-dire de pas de vis , la présente invention consiste à doter le manchon correspondant de ce même aspect. Selon que le manchon est mâle ou femelle la surface extérieure de son enveloppe ou la surface intérieure, sur une longueur déterminée, a une forme hélicoïdale ou de pas de vis. Le pas du manchon correspond naturellement au pas du tuyau souple. Ainsi le montage est aisé. On visse le tuyau sur le manchon ou inversement.

Naturellement le même dispositif peut être employé en aval du ventilateur, quel que soit la finalité.

Dans les appareils connus, en sortie rigide du ventilateur, utilisant des brides boulonnées, le nettoyage est malaisé. Dans la présente invention le conduit de soufflage est fixé au ventilateur par attaches rapides - tous types - ce qui facilite le nettoyage.

Enfin pour les appareils à vidange en élévation, il est apparu que pour les tracteurs de puissance modeste l'utilisation d'un couvercle à charnière horizontale fixe frontale engendrait, pour éviter son ouverture au-dessus du conducteur, ce qui est dangereux, un recul prohibitif de la fixation de l'appareil sur le tracteur. Dans une autre réalisation préférentielle de l'invention la charnière du couvercle, toujours solidaire du chassis, est latérale. Son axe est parallèle au sens de marche. Elle sera jusdicieusement située au-dessus du ventilateur et de l'autre côté du conduit d'amené du gazon par rapport au réservoir. Une tige à rotules commande l'ouverture et la fermeture du couvercle. Cette tige est solidaire à l'une de ses extrémités de l'extrémité ou mieux de l'extrémité légérement prolongée du bras correspondant de relevage du réservoir. L'autre extrémité de cette tige est fixée au couvercle. Ainsi l'élévation du réservoir commande l'ouverture du couvercle. La longueur de cette tige et ses points d'ancrage tant sur le couvercle que sur le bras de relevage du réservoir sont tels qu'à l'élévation du réservoir jusqu'au déversement correspond une ouverture totale du couvercle.

Dans ce qui suit, par des exemples non limitatifs, l'invention est exposée plus en détail.

La figure 1 représente un ventilateur réalisé selon l'invention.

La figure 2 représente un réservoir de stockage avec trappe et mécanisme.

La figure 3 est une vue détaillée de l'axe du levier de commande.

La figure 4 est une vue du sustème à chicanes d'épuration de l'air.

La figure 5 est une vue du réservoir de stockage à vidange en élévation avec couvercle frontal et mécanisme.

La figure 6 est une vue d'un mécanisme à tourniquet pour sacs poubelle.

La figure 7 est une vue du chassis universel.

La figure 8 est une vue du coffre de réception flottant et son système ancrage.

La figure 9 est une vue arrière en cours d'ouverture du système d'ouverture latérale du couvercle pour réservoir à vidange en élévation.

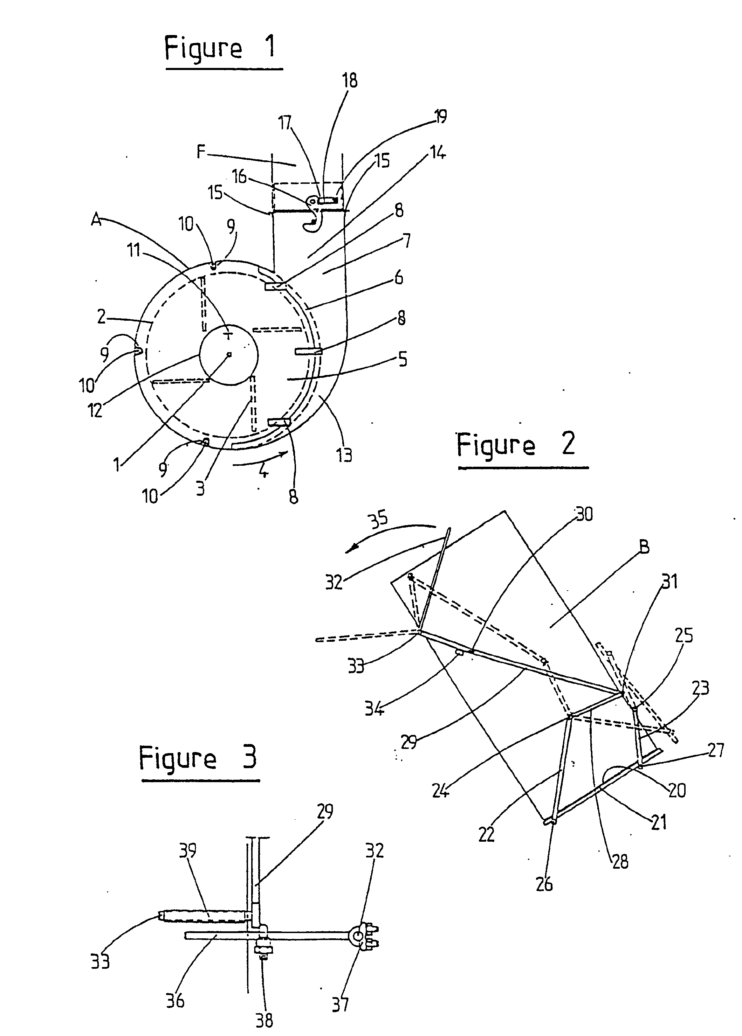

La figure 1 représente un ventilateur centrifuge A. Sur l'axe 1 du rotor porté par deux paliers situés derrière le ventilateur et non représentés, est soudé, dans l'exemple, un disque 2. Sur ce disque sont soudées quatre pales identiques 3. Chaque plan qui contient chacune de ces pales est parallèle et extérieur à l'axe 1. Suivant le sens de rotation 4 chacun de ces plans précéde le plan qui lui est parallèle et qui contient l'axe 1. Même si chaque plan qui contient chaque pale est sécant au cercle 12 - ou au cercle principal en cas d'ellipse - d'orifice de pénétration de la matière dans le ventilateur, chaque pale est entièrement extérieure à ce cercle 12. Dans une réalisation préférentielle, représentée à titre d'exemple, chaque plan qui contient chaque pale est extérieur ou au plus tangent à ce cercle 12. La flasque 5 ou est ménagé cet orifice 12, chevauche en 6, côté intérieur, sous la paroi 7 du stator. Elle est maintenue contre cette paroi par les guides 8. Ces guides, soudés sur la flasque 5, sont contre-coudés et se glissent par dessus la paroi 7. Les encoches 9 dans la flasque 5 permettent de verrouiller cette flasque sur le corps du ventilateur à l'aide des écrous à oreilles 10. Dans l'exemple la cage du rotor a pour section intérieure une spirale à deux centres : le centre 1 naturellement et le centre 11. Ces deux centres, sur des axes parallèles, sont situés dans un plan parallèle au plan qui contient la paroi extérieure du conduit d'éjection. Ainsi la partie libre entre le rotor et la cage, notamment le croissant 13, est réduite à un minimum compatible avec une section d'éjection suffisante 14.

La section 14 du ventilateur est reliée au réservoir de stockage par le tuyau F - sur le dessin seule est représentée la partie de ce tuyau accouplée à la section 14 -. Pour le nettoyage il est bon que ce tuyau se monte et se démonte rapidement. Pour cela il est emmanché sur le ventilateur A jusqu'aux butées en cornière 15. Deux crochets 16, un de chaque côté, le verrouillent en place. Pour empêcher ces crochets 16 de s'ouvrir intempestivement ils présentent chacun une butée 17 aux pièces 18, une de chaque côté, qui tournent librement chacune autour de leur axe 19. Pour décrocher on relève les pièces 18 ce qui libère les crochets 16.

La figure 2 représente un exemple de réservoir B de stockage de produit ramassé avec trappe de vidange. La trappe est représentée fermée en traits pleins et ouverte en pointillés.

Le réservoir a, dans l'exemple, la forme parallélipipédique et une position inclinée. Ceci facilite la construction. La face inférieure 20 est obstruée par la trappe 21. Cette trappe est suspendue aux bras 22 et 23 par les articulations solidaires du réservoir 24 et 25 d'une part, et par les articulations 26 et 27 solidaires de la trappe d'autre part. Naturellement on trouve du côté opposé du réservoir et symétriquement les mêmes bras 22 et 23. Pour éviter que la trappe 21, lorsqu'elle est en mouvement, ne se tourne en travers, les deux bras 22 et (ou) les deux bras 23, sont rendus solidaires l'un de l'autre par un tube de jonction, soudé par exemple. Un bras de levier 28 est solidaire du bras 22. Un tiran 29, articulé en 30 est accroché au bras 28 par l'axe 31. Il est solidaire du levier 32. L'un et l'autre étant rotatifs en 33. Un butée 34 empêche l'angle formé par le bras articulé en 30 de se refermer sous la poussée de l'axe 31, donc empêche l'ouverture intempestive de la trappe. Cette butée est assez basse pour que l'angle ne puisse se refermer par déplacement vers le haut de l'articulation 30. Par contre, en agissant sur le levier 32 dans le sens de la flèche 35, on dégage le bras 29 de la butée 34. Avec le levier la partie du bras 29 qui lui est rattachée tourne autour de 33. Ainsi on fait une traction sur le bras 28 par l'intermédiaire de l'axe 31 et de l'autre partie du bras 29. Le bras 22 tourne autour de son axe 24. Il entraine le dégagement de la trappe 21 qui elle même fait tourner le bras 23 autour de son axe 25. La longueur de la partie du bras 29 qui tourne autour de l'axe 33 est de préférence telle qu'une rotation légérement supérieure à 180° dégage la trappe 21 totalement de l'ouverture 20 du réservoir pour la positionner en ouverture totale - en pointillés sur le dessin -. Cette position est obtenue par un judicieux rapport des longueurs respectives des bras 22 et 23. La partie du tirant 29 qui est rattachée en 31 au bras 28 prend alors appui sur la butée 34 empêchant ainsi la chute de la trappe. Il faut alors opérer une traction sur le levier 32 dans le sens inverse de la flèche 35 pour abaisser à nouveau la trappe. Un dessin judicieux consiste à faire en sorte que la verticale abaissée du centre de gravité de la trappe, lorsqu'elle est ouverte, tombe du même côté du réservoir par rapport à l'axe 25. Ainsi d'elle même la trappe se maintien automatiquement ouverte.

La figure 3 représente un détail du dispositif de l'axe 33 de rotation du levier. Quelque soit la technique d'ouverture de trappe employée la position adéquate du levier de commande de la trappe change d'un porteur à l'autre en raison des obstacles possibles : ailes de roues ou autre, et même varie suivant la morphologie de l'utilisateur. Dans la présente invention ce levier est réglable en longueur et en position angulaire et latérale. La technique consiste à utiliser un arbre secondaire 36 d'une longueur au moins égale au déport latéral maximum désiré. En bout de cet arbre est fixé - par soudure de préférence - l'une des parties d'un dispositif de serrage 37 - dans l'exemple représenté on utilise un serre cable normalisé -. Ce dispositif sert à bloquer à la position désirée le levier 32. On en règle ainsi sa longueur. Dans l'exemple ce levier est en fer rond et il est vu en bout. Cet arbre 36 est lui même bloqué en position adéquate par un semblable dispositif de sérrage 38 - également un serre cable dans l'exemple représenté -. Ainsi l'arbre 36 avant blocage du serre cable 38 peut se déplacer latéralement et angulairement et on peut bloquer à la position voulue. Il suffit alors de rendre, par soudure de préférence, ce serre cable 38 solidaire du bras 29 lequel est soudé à un extrémité de l'axe 33. Dans l'exemple le tube 39, fixé sur réservoir sert de palier à l'axe 33.

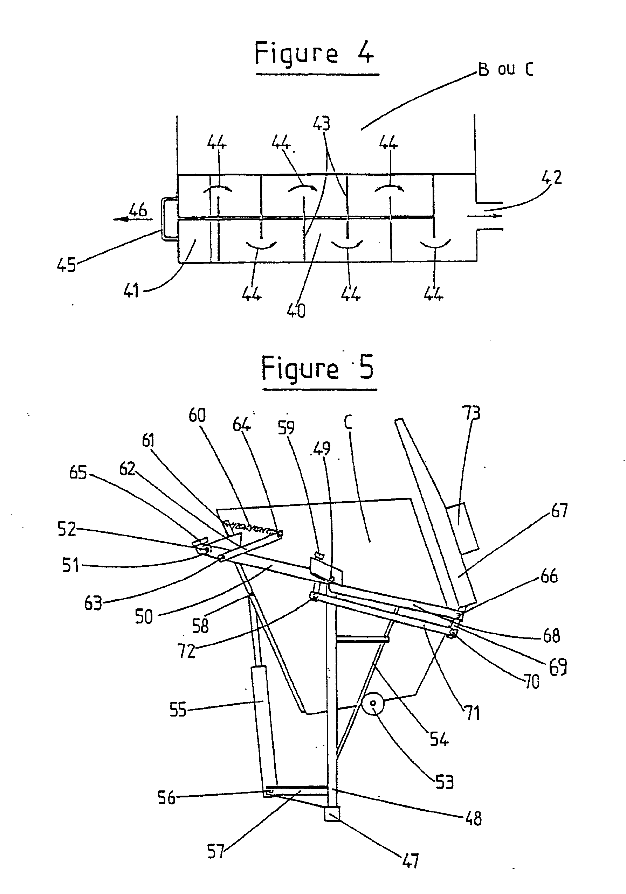

La figure 4 représente un vue de dessus et shématiquement un dispositif à chicanes situé en haut et à l'intérieur d'un réservoir de stockage du produit ramassé. Ce réservoir peut, dans l'utilisation de ce système, être doté de parois pleines. Ce système sépare l'air du produit ramassé.

Dans la partie haute du réservoir B ou C, de préférence dans un angle ce qui simplifie la fabrication, on ménage un conduit 40. Ce conduit 40 est en communication à l'une de ses extrémités par le passage 41 avec l'intérieur du réservoir, et à l'autre extrémité par le passage 42 avec l'air libre. A l'intérieur de ce conduit un système à chicanes 43 oblige l'air chargé qui pénètre par l'ouverture 41 à suivre le parcours matérialisé par les flèches 44 pour sortir épuré par l'orifice 42. Le système intérieur à chicanes a avantageusement l'aspect d'un tiroir que l'on tire par la poignée 45 dans le sens de la flèche 46 pour extraire les chicanes et au fur et à mesure les débarrasser du produit solide retenu par chute dans le réservoir à travers l'ouverture 41. Avantageusement sur l'orifice 42 on adapte un tuyau adéquat - non représenté - reliant cet orifice au collecteur d'aspiration. Ainsi l'appareil tourne partiellement en circuit fermé. L'air élément transporteur du produit à ramasser est recyclé. Naturellement sans sortir du cadre de l'invention, de nombreux autres dispositifs peuvent être retenus, et notamment il n'est nullement obligatoire que le dispositif à chicanes soit situé à l'intérieur du réservoir. De même un dispositif à cyclone peut avantageusement être utilisé.

Dans un mode de réalisation de l'invention la figure 5 représente une vue de côté de l'ensemble du dispositif hydraulique permettant le déversement en hauteur du réservoir C de stockage du produit ramassé. Dans cette vue, par clarté, le ventilateur et le conduit d'amené n'ont pas été représentés. Pour la clarté également l'ensemble est représenté le mouvement en élévation étant nettement amorcé.

Sur le chassis tubulaire 47 transversal au sens de marche, est fixé un poteau vertical 48, naturellement on a le même en symétrie de l'autre côté du réservoir C. En haut de ces poteaux deux axes 49, un de chaque côté, reçoivent les bras 50, un de chaque côté. Ces deux bras 50 sont liés rigidement ensemble par le tube 51, tube vu en bout et en pointillés sur le dessin. Le réservoir C est fixé à ses bras 50 par l'axe 52, axe de levage et de déversement. La partie basse du réservoir C est guidée par deux roulettes 53 - une de chaque côté - qui lui sont solidaires. Ces deux roulettes prennent appui dans l'exemple d'abord contre les poteaux 48 eux-même, puis,dès que le couvercle est suffisamment soulevé, c'est-à-dire dès que la rotation du réservoir peut être amorcée, contre les guides 54, un de chaque côté. Ces guides sont positionnés de façon à imprimer au bas du réservoir un mouvement d'écartement par rapport à l'axe 52 donc un mouvement de rotation du réservoir. Le vérin de levage et de rotation 55 prend appui par son axe 56 sur la pièce 57 solidaire du chassis 47. La poussée s'exerce sur le réservoir par l'axe 58. Lorsque le réservoir est en partie basse, c'est à dire de remplissage, la tige du vérin est totalement rentrée. La mise en pression par le fût du vérin fait sortir sa tige, soulève l'axe 58 donc soulève le réservoir C. Le bras 50 tourne vers le haut autour de son axe 49 et ce jusqu'à la butée 59 - dans l'exemple une vis réglable - deux butées 59, une de chaque côté. Naturellement les roulettes 53 guides du bas du réservoir, grimpent le long des poteaux 48 puis des guides 54. La butée 59 qui limite vers le haut le mouvement des bras 50, donc de l'axe 52, va permettre d'utiliser la course résiduelle du vérin à la rotation de déversement du réservoir. L'axe 52 devient momentanément un point fixe et l'axe 58 va décrire un arc de cercle d'un rayon égal à la distance fixe entre les deux axes 52 et 58 et d'une valeur suffisante pour assurer un déversement total du réservoir. Et dans ce cas le centre de gravité du réservoir C va passer de l'autre côté de l'axe 52 et au moment de la descente le réservoir va rester dans cette position. Pour assurer la rotation du réservoir C dès la rentrée de la tige du vérin 55 et avant que l'axe 52 n'amorce sa descente on dispose du ressort de traction 60. Celui-ci a l'une de ses extrémités accrochée au réservoir en 61 et l'autre au bras 50 par l'intermédiaire du petit bras 62. Ce petit bras 62 est rotatif autour de son axe 63 ancré sur50. Son autre extrémité est accrochée en 64 au ressort 60, une butée 65 fixée sur le bras 50 limite la rotation du bras 62. Ainsi pendant tout le début de la rotation du réservoir C, le ressort 60 accroché au réservoir en 61 accompagne cette rotation sans entrer en tension. C'est seulement lorsque le bras 62 prend appui contre la butée 65 que le ressort agit. Cette butée 65 est positionnée pour que cela se produise quelques degrés avant que la verticale abaissée du centre de gravité du réservoir C ne passe au delà de l'axe 52. De cette manière lorsque le vérin 55 amorce sa rentrée, avant que l'axe 52 n'en fasse autant, le ressort 60 rappel le réservoir C en position telle que la verticale abaissée de son centre de gravité repasse du même côté que l'axe 58 par rapport à l'axe 52. La fin de la rotation du réservoir C est alors assurée par gravité. La roulette 53 prend appui sur son guide 54 et le réservoir C redescend en position de remplissage.

Dans la présente invention l'axe 66 du couvercle 67 n'est pas solidaire du réservoir C mais du chassis 47 par l'intermédiaire du poteaux 48 et du bras 68 lequel est soudé sur le poteau 48, naturellement un ensemble de pièces de chaque côté du réservoir. Cet axe 66 rattaché au couvercle par la pièce 69 a donc une position fixe par rapport au chassis. La pièce 69 est prolongée jusqu'à l'axe 70. Cet axe est relié par le tiran 71 et l'axe 72 au bras 50. Ainsi le mouvement vers le haut du bras 50 entraine l'ouverture du couvercle 67. Le rapport des distances entre les axes 66 et 70 d'une part, et 49 et 72 d'autre part est tel qu'à la rotation du bras 50 jusqu'à la butée 59, correspond une ouverture totale du couvercle. La longueur du tiran 71 est telle qu'à la position basse de remplissage du réservoir C correspond une fermeture totale et rigide du couvercle 67. Dans cette position l'angle formé par la droite qui joint les axes 66 et 70 et celle qui joint 72 et 70 est un angle le plus fermé possible, tandis que l'angle formé par la droite qui joint les axes 49 et 72 et celle qui joint les axes 72 et 70 est un angle voisin de l'angle droit. Cette position permet un dégagement rapide du couvercle 67 dès la mise en montée du réservoir C. Le réservoir C s'encastre dans le couvercle 67. Pour assurer que sa partie haute ne touche au début du mouvement le haut du couvercle celui-ci est doté d'une certaine hauteur. Sur le flan du couvercle profitant de cette hauteur, au mieux sur le dessus est ménagé l'orifice 73 de pénétration du produit ramassé et éjecté par le ventilateur A.

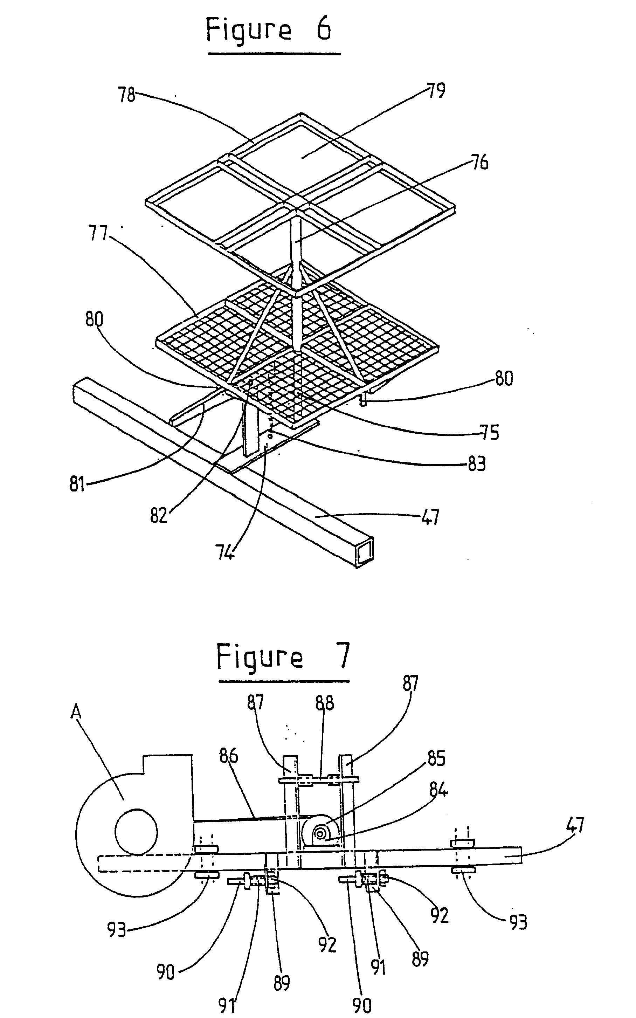

La figure 6 représente un système à tourniquet fixé sur le chassis 47 pour quatre sacs de récupération.

Sur le chassis 47 est fixé un bras 74 qui porte l'axe vertical 75. Cet axe reçoit le tourniquet. Un tube central 76 axe du tourniquet obstrué à sa partie supérieure est emmanché librement sur l'axe 75. La fermeture du tube 76 prend appui sur l'extrémité supérieure de l'axe 75. Un cadre carré inférieur 77 - dans l'exemple, pour la légéreté en cornières et grillage - est solidaire de l'extrémité basse du tube 76. C'est le support inférieur des sacs. Un cadre carré supérieur 78, en cornières, est solidaire de l'extrémité haute du tube 76. Il porte quatre systèmes classique 79 de fixation des sacs. Soudés au cadre 77 - dans l'exemple en dessous - quatre jeux de butées d'arrêt 80 permettent de positionner successivement chaque système 79 exactement en dessous de l'orifice - non représenté - de sortie de la matière éjectée par le ventilateur. Un levier 81, porté par l'axe 82 solidaire du chassis 47, maintenu en position par le ressort 83, permet le verrouillage et le déverrouillage du tourniquet.

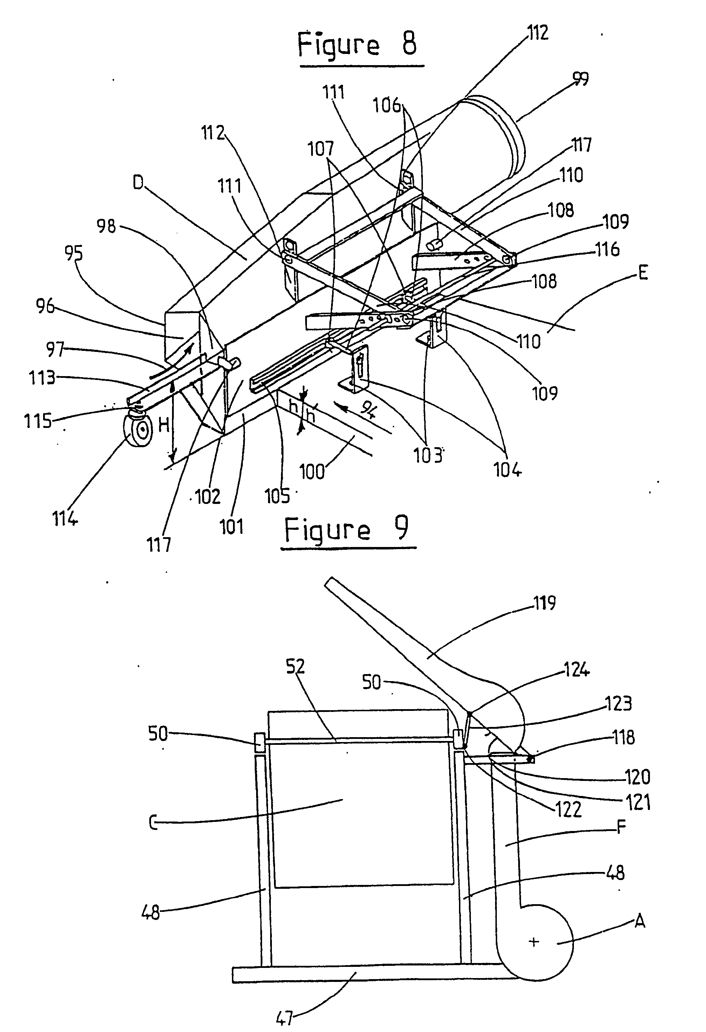

La figure 7 représente un exemple de chassis universel. Celui-ci est essentiellement composé d'un tube carré 47 de section appropriée et de forte épaisseur. Sur ce tube à une extrémité, est fixé le ventilateur A. Généralement cette fixation se fait par boulons et trous oblongs pour la tension des courroies. Dans l'exemple la rotation du ventilateur A se fait par prise de force, non représentée, à travers les paliers 84, la poulie 85 et la courroie 86. De chaque côté des paliers 84 et dans leur voisinage immédiat deux montants 87 soudés sur le tube 47 peuvent recevoir un axe supérieur 88 support de l'appareil. De chaque côté également mais à une distance l'un de l'autre correspondant à l'écartement moyen des bras inférieurs d'un système trois points classique, deux pièces 89, chacunes percées d'un trou sont soudées au tube 47. Sur ces plaques sont montés les deux tourillons 90. Mais à la différence du montage classique ces deux tourillons 90 sont montés dans la même orientation et non symétriquement par rapport à l'axe du tracteur porteur. Ainsi lorsqu'ils sont montés comme représenté sur le dessin, orientés vers le ventilateur celui-ci est plus proche de l'axe longitudinal du tracteur, et ce montage convient pour les tracteurs moins larges. Lorsqu'ils sont montés dans l'orientation inverse, mais toujours tous les deux dans la même orientation, le ventilateur est plus éloigné de l'axe longitudinal du tracteur et ce montage convient pour les tracteurs plus larges. On augmente encore l'importance du déport en intercallant une bague 91 entre l'épaulement du tourillon 90 et la plaque support 89 et ce à chaque tourillon et quelque soit l'orientation retenue. En cas de déport intermédiaire - sans bague 91 - celle-ci sera utilement bloquée entre la plaque 89 et l'écrou 92. On obtient ainsi quatre positionnements possibles de l'appareil, ce qui répond à tous les cas de figure.

Sur la partie libre du tube 47 on fixe généralement à l'aide des brides 93 - deux sont représentées - les autres éléments constitutifs de l'appareil notamment le réservoir, non représenté, quelqu'il soit.

La figure 8 représente un coffre de réception D réalisé selon l'invention et positionné selon l'invention sur le carter de la tondeuse E.

A l'intérieur de la tondeuse E le gazon est électé suivant la flèche 94 à l'intérieur du coffre D contre la paroi d'impact 95. A l'avant du coffre D est ménagée une entrée 96 d'air dirigé suivant la flèche 97 le long de la paroi 95 par le déflecteur 98. Cette entrée d'air 96 a une section trés nettement inférieure à la section 99 d'écoulement du produit vers le ventilateur. Cette entrée d'air 96 peut être reliée - par tuyau métallique souple non représenté - à la tubulure d'échapement du moteur.

D'autre part entre la paroi verticale frontale 100 de la tondeuse et la paroi déflectrice 98 est ménagée une entrée d'air 101 dont le flux s'interpose entre cette paroi 98 et le gazon projeté par la tondeuse. Ainsi cette paroi 98 est protégée de toute adhérence possible en cas de gazon humide.

Ce coffre D a une hauteur H nettement supérieure à la hauteur h de la tondeuse la plus haute actuellement en usage. Ceci permet de l'adapter à toute tondeuse quelque soit sa hauteur. L'ouverture laissée béante entre le dessus de la tondeuse E et la paroi supérieure du coffre D du fait de cette différence de hauteur est obstruée par la tôle 102. La hauteur de cette tôle 102 la même pour toutes les adaptations, est supérieur à H - h' (h' étant la hauteur de la tondeuse la moins haute du marché). Sa longueur est égale à la longueur de l'orifice de pénétration du gazon dans le coffre D. Cette longueur est supérieure à la longueur de la section de l'orifice d'éjection de la tondeuse dotée, sur le marché, de la plus grande largeur d'éjection. Cette particularité permet de toujours obtenir un orifice d'entrée d'air 101 quelque soit cette largeur. Cette tôle 102 est montée solidaire de la tondeuse et elle est porteuse et guide du coffre D.

Sur le dessus du carter de la tondeuse on sélectionne deux trous quelconques 103 - il y a toujours au moins les deux trous qui servaient à fixer le déflecteur originel de la tondeuse - où l'on boulonne les deux fers plats équerres 104. Sur la partie verticale de ces pièces 104 il y a deux trous oblongs, un sur chaque pièce. Sur la tôle 102 et dans le sens de sa longueur, est soudé un profilé rectangle ouvert 105 de façon à ce que l'ouverture du rectangle fasse face aux pièces 104. Ce profilé 105 sert de glissière aux têtes des boulons 106. Les écrous 107 permettent de bloquer ces boulons 106 à l'endroit adéquat. Ces boulons 106 sont d'autre part bloqués entre chacun deux écrous sur les pièces 104 à travers les trous oblongs de ces pièces 104. Selon l'éloignement des trous 103 du plan vertical de la section de l'orifice de sortie du gazon de la tondeuse les pièces 104 sont bloquées sur le carter de la tondeuse comme représenté ou suivant une rotation de 180°. Ainsi la tôle 102 peut être positionnée idéalement à la sortie de la tondeuse réglable qu'elle est suivant les trois axes. Sur cette tôle 102 sont soudées les pièces 108 dotées à leur extrémités libres des axes 109, les bras 110 relient ces axes 109 aux axes 111, les axes 111 portent le coffre de réception D par les pièces 112. Les axes 111 sont de longueurs différentes ce qui permet au montage de les positionner successivement et non simultanément.

Solidaire du coffre D par la pièce 113 une roue pivotante 114 réglable en hauteur par la tige filetée 115 assure un positionnement parfait du coffre D par rapport au sol, ce coffre étant libre en hauteur par rapport à la tondeuse E. La tige 116 positionnée dans deux des trous adéquats percés dans les bras 108 limite le mouvement vers le bas du coffre D au moment du relevage de la tondeuse par butée sur cette tige 116 des bras 110. Ces trous, dans l'exemple au nombre de cinq, sur les pièces 108, sont judicieusement percés suivant un arc de cercle permettant d'obtenir des intervalles de réglage réguliers.

Le coffre D qui peut osciller autour des axes 111 est maintenu en place à la sortie de la tondeuse donc contre la plaque 102 par les glissières 117. Ces glissières 117 en forme de U sont solidaires du coffre D et utilisent les embouts verticaux de la plaque 102 comme guide. Dans ce but pour laisser le passage aux guides 117 le profilé 105 s'arrête à quelques centimètres des bords verticaux de la tôle 102. Ainsi le coffre D peut librement monté et descendre par rapport à la tondeuse mais ne peut pas se déplacer en avant ou en arrière par rapport à celle-ci ni s'en écarter. Pour le démontage il suffit de lever le coffre D jusqu'à ce que les glissières 117 échappent de la tôle 102 et de lui imprimer un léger mouvement en avant (ou en arrière selon le montage) pour que les axes 111 échappent de leurs supports.

Enfin l'extrémité 99 du coffre sur laquelle est emmanché le tuyau souple hélicoïdal et qui la reliera au ventilateur, présente une surface extérieure dotée en relief d'un pas de vis correspondant au pas du tuyau. Ainsi le tuyau souple peut être aisément vissé sur cet embout 99. Il en va de même pour les autres raccordements de l'appareil que le tuyau souple soit mâle ou femelle.

La figure 9 représente en cours de manoeuvre et vue arrière un exemple de système d'ouverture latérale du couvercle pour réservoir à vidange en élévation. La charnière 118 du couvercle 119 est située au-dessus du ventilateur A. Son axe est parallèle au sens de marche. Cette charnière 118 est solidaire du chassis 47 par l'intermédiaire du poteau correspondant 48 sur lequel on a fixé le support 120 de la charnière 118. Naturellement le couvercle 119 comporte un orifice 121 d'entré vers le réservoir C du gazon éjecté par le ventilateur A à travers le conduit F. A l'extrémité du bras correspondant de relevage 50 - sur la figure vu en bout - et de préférence légérement au delà de l'axe 52 d'ancrage du réservoir C sur le bras 50 est fixée l'extrémité à rotule 122 de la tige 123 de commande de positionnement du couvercle 119, l'autre extrémité 124 de la tige 123 à rotule également est solidaire du couvercle 119. La rotule de jonction 124 est située, lorsque le couvercle est fermé, c'est-à-dire le réservoir étant en position basse, a proximité du bord supérieur correspondant du réservoir. Comme le rayon de rotation de la rotule 122 sur le bras 50 autour de l'axe 49 - non représenté sur cette figure - est supérieur au rayon de rotation du point d'ancrage 52 du réservoir, dès le commencement du levage le couvercle 119 s'ouvre plus vite que ne montera le réservoir C. La longueur de la tige 123 correspond à une fermeture totale du couvercle 119,le réservoir C étant en position basse. La longueur du bras 120 par rapport à celle de la tige 123 est telle qu'on obtient une ouverture totale du couvercle pour un mouvement complet du bas vers le haut des bras 50 jusqu'à leur butée 59 - non représentée sur cette figure - limitant l'élévation du réservoir C avant déversement.

Naturellement l'invention n'est pas limitée aux modes de réalisation présentés. Sans sortir du domaine de protection de l'invention de nombreuses modifications demeurent possibles.

## Revendications

1) Appareil pour le ramassage du gazon, des feuilles mortes et autres souillures du sol comprenant une turbine d'aspiration et de soufflage reliée en amont par un conduit d'aspiration à un dispositif collecteur du produit à ramasser et en aval par un conduit de soufflage à un réservoir de stockage supporté par un chassis caractérisé en ce que :

1°- les pales du rotor du ventilateur sont extérieures à l'espace défini par l'orifice de pénétration de la matière
et ou

2°- le guidage et la mise en élévation et le déversement du réservoir de stockage s'obtient par un seul vérin hydraulique, un compas double et un système à galets
et ou

3°- la charnière du couvercle du réservoir à vidange en élévation est solidaire du chassis de l'appareil et non du réservoir
et ou

4°- le chassis de l'appareil est constitué pour l'essentiel d'un tube unique avec réglage de positionnement latéral
et ou

5°- le coffre de réception à la sortie de la tondeuse est doté de prises d'air extérieures orientées et ou il a une section de pénétration du gazon supérieure à la section de sortie du gazon de la tondeuse porteuse quelle qu'elle soit et ou il est flottant par rapport à la tondeuse
et ou

6°- le coffre de réception à la sortie de la tondeuse est fixé à celle-ci par un système universel de fixation adaptable sans transformation sur toute tondeuse.

2) Dispositif selon la revendication 1 caractérisé en ce que, si le plan qui contient chaque pale de la turbine est sécant au cercle, ou au cercle principal en cas d'ellipse, d'orifice de pénétration de la matière dans le ventilateur, chaque pale est néammoins entièrement extérieure à ce cercle.

3) Dispositif selon la revendication 1 caractérisé en ce que lorsque l'appareil est équipé d'un réservoir à vidange en élévation, le guidage de la partie haute du réservoir au moment de l'élévation se fait par jonction rotative du réservoir à chacune des extrémités de deux bras articulés, ou compas, tournant semblablement par leurs autres extrémités autour d'un axe fixe, horizontal parallèle à l'axe de déversement.

4) Dispositif selon la revendication 1 caractérisé en ce que lorsque l'appareil est équipé d'un réservoir à vidange en élévation, le guidage de la partie basse du réservoir au moment de l'élévation se fait par un ou par plusieurs patins, roulettes, rouleaux ou galets prenant appui sur chacun un guide positionné de façon à ce que le plan - ou les plans, ou au moins l'un des plans s'il y en a plusieurs - qui contient au moins deux positions du système de guidage du bas du réservoir, forme un angle aigu - ou chacun un angle aigu - ouvert vers le haut avec le plan qui contient le système de guidage du haut du réservoir ou qui contient au moins deux positions de ce système et ceci quelque soit le système de guidage du haut ou du bas du réservoir.

5) Dispositif selon la revendication 1 caractérisé en ce que lorsque l'appareil est équipé d'un réservoir à vidange en élévation par basculement, l'amplitude de la rotation du réservoir est telle que la verticale abaissée du centre de gravité du réservoir tombe du côté opposé à l'axe de poussée du ou des vérins de levage par rapport à l'axe de rotation du réservoir.

6) Dispositif selon la revendication 5 caractérisé en ce que le retour de la verticale abaissée du centre de gravité du réservoir du même côté que l'axe de poussée du ou des vérins de levage par rapport à l'axe de rotation du réservoir est assuré par un ou plusieurs ressorts dont une extrémité est solidaire du réservoir et l'autre d'un point fixe du système haut de guidage quelque soit ce système.

7) Dispositif selon la revendication 6 caractérisé en ce que l'on relie l'une des extrémités de ce ou de ces ressorts à son point d'ancrage, non plus directement mais par l'intermédiaire d'un bras libre en rotation jusqu'à une butée provoquant l'action du ou des ressorts peu avant ou au plus tard au moment où la verticale abaissée du centre de gravité du réservoir passe de l'autre côté de l'axe de poussée du ou des vérins par rapport à l'axe de rotation du réservoir.

8) Dispositif selon la revendication 1 caractérisé en ce que lorsque l'appareil est équipé d'un réservoir à vidange en élévation par basculement la charnière du couvercle de ce réservoir n'est pas solidaire du réservoir lui-même mais du chassis de l'appareil et a donc une position fixe par rapport à ce chassis.

9) Dispositif selon la revendication 8 caractérisé en ce que l'orifice d'entrée dans le réservoir du produit ramassé est ménagé sur le couvercle lui-même soit sur le côté soit sur le dessus.

10) Dispositif selon la revendication 1 caractérisé en ce que le chassis est pour l'essentiel composé d'un tube unique constituant l'armature porteuse des composants de l'appareil.

11) Dispositif selon la revendication 1 caractérisé en ce que le chassis est doté d'un dispositif permettant différentes positions latérales de l'appareil lorsqu'il est fixé sur le trois points d'un quelconque tracteur porteur.

12) Dispositif selon la revendication 1 caractérisé en ce que lorsque l'appareil est accouplé à une tondeuse, le coffre de réception du gazon à la sortie de la tondeuse est doté en amont de la zone de pénétration du gazon d'une prise d'air extérieure 96 dirigée par un déflecteur 98 vers la paroi d'impact 95 du gazon éjecté par la tondeuse.

13) Dispositif selon la revendication 12 caractérisé en ce que la section de cette prise d'air 96 est nettement plus faible que la section 99 d'écoulement du produit vers le ventilateur.

14) Dispositif selon la revendication 1 caractérisé en ce que la longueur et la hauteur de la section de pénétration du gazon du coffre de réception ne varie pas d'un appareil à l'autre (dimension unique) et sont toujours nettement supérieures à la section de sortie du gazon de la tondeuse à laquelle on l'accouple quelque soit cette tondeuse.

15) Dispositif selon la revendication 1 ou 14 caractérisé en ce qu'une prise d'air non chargée 101 - extérieure à la tondeuse - est ménagée entre le déflecteur 98 et la face 100 frontale de la tondeuse.

16) Dispositif selon la revendication 1 ou 14 caractérisé en ce que l'ouverture laissée béante entre le dessus du carter de la tondeuse E et la paroi supérieure du coffre D du fait de cette différence de hauteur est obstruée par une tôle 102 d'une longueur égale à la longueur de l'orifice de pénétration du gazon dans le coffre D.

17) Dipositif selon la revendication 1 caractérisé en ce que le réglage en hauteur du coffre D s'obtient grâce à un système de bras articulés - ou compas - Un axe fixe solidaire de la tondeuse est relié à un axe mobile solidaire du coffre par l'intermédiaire de pièces de jonction oscillant verticalement.

18) Dispositif selon la revendication 1 caractérisé en ce que le coffre D de réception est flottant.

19) Dispositif selon la revendication 18 caractérisé en ce que un patin ou une ou plusieurs roulettes ou rouleaux solidaires du coffre D permet de positionner le coffre de réception D par rapport au sol indépendamment du réglage de la hauteur au sol de la tondeuse.

20) Dispositif selon la revendication 16 ou 18 caractérisé en ce que le coffre de réception D est maintenu contre l'orifice de sortie du gazon de la tondeuse par un ou deux guides 117 utilisant la tôle 102 ou analogue comme glissière.

21) Dispositif selon la revendication 1 caractérisé en ce que lorsque l'appareil est accouplé à une tondeuse, le coffre D de réception est ancré à la tondeuse par un système universel de fixation adaptable sans transformation sur toute tondeuse.

22) Dispositif selon la revendication 1 ou 21 caractérisé en ce que le dispositif d'ancrage et d'adaptation avec réglage précis en hauteur du support du coffre D sur la tondeuse est déterminé par blocage des boulons 106 à la hauteur adéquate dans les trous oblongs que l'on a ménagés verticalement sur les équerres 104 que l'on a bloquées sur le carter de la tondeuse à l'aide des trous quelconques préexistants sur le carter.

23) Dispositif selon la revendication 1 ou 21 caractérisé en ce que le dispositif d'ancrage et d'adaptation avec réglage précis au droit du plan vertical de la section de sortie du gazon de la tondeuse est déterminé par réglage des écrous bloquant les boulons 106 sur les pièces 104.

24) Dispositif selon la revendication 1 ou 21 caractérisé en ce que le dispositif d'ancrage et d'adaptation avec réglage précis longitudinal de la section d'entrée du coffre D en face la section de sortie de la tondeuse E et déterminé par réglage de la glissière 105, bloquée à l'endroit adéquat sur les boulons 106, la glissière 105 étant solidaire du support du coffre D.

25) Dispositif selon la revendication 1 ou 16 caractérisé en ce que la tôle 102 ou similaire sert d'élément de jonction entre le système support du coffre, flottant ou non, et le système, universel ou non, de fixation au carter de la tondeuse.

# Figure 1

# Figure 2

# Figure 3

# Figure 4

# Figure 5

# Figure 6

# Figure 7

Figure 8

Figure 9